# FASCICULE DE BREVET EUROPEEN

(11) **EP 0 798 195 B1**
(45) Date de publication et mention de la délivrance du brevet: **10.10.2001**
(21) Numéro de dépôt: 97400634.8
(22) Date de dépôt: 21.03.1997
(51) Int. Cl.: B62D 1/20, F16D 3/38, F16D 1/08

(54) **Dispositif de raccordement de deux arbres d'une commande de direction d'un véhicle automobile**
Verbindungsvorrichtung für zwei Wellen einer Lenkvorrichtung eines Motorfahrzeuges
Connecting device for two shafts of a motor vehicles's steering unit

(30) Priorité: 29.03.1996 FR 9603930
(43) Date de publication de la demande: 01.10.1997
(73) Titulaire: AUTOMOBILES PEUGEOT, 75116 Paris (FR); AUTOMOBILES CITROEN, 92200 Neuilly-sur-Seine (FR)
(72) Inventeur: Coignoux, Sébastien, 92800 Puteaux (FR)
(74) Mandataire: Gendraud, Pierre

(56) Documents cités:
- EP-A- 0 292 442

## Description

L'invention est relative à un dispositif de raccordement de deux arbres d'une commande de direction d'un véhicule automobile.

Elle se rapporte plus particulièrement au raccordement de la partie inférieure d'un arbre relié à un volant de commande situé dans l'habitacle d'un véhicule, à un arbre relié à un organe d'entraînement d'un mécanisme de direction de ce véhicule, cet organe tel qu'un pignon de crémaillère ou un élément mobile d'une vanne d'assistance étant situé dans le compartiment moteur du véhicule.

Ce compartiment étant séparé de l'habitacle par une cloison dite tablier, le raccordement s'effectue à proximité de celui-ci, soit dans une partie du compartiment moteur généralement difficile à accéder et encombrée de nombreux dispositifs du véhicule, soit dans une partie également peu accessible de l'habitacle et occupée notamment par un pédalier de commande.

Les divers dispositifs habituellement utilisés pour ce raccordement comportent des vis perpendiculaires à l'arbre dont la mise en place est généralement particulièrement difficile -et impossible par des moyens robotisés- à cause de la mauvaise accessibilité susmentionnée.

Un tel dispositif de raccordement décrit dans le document EP 292 442 comprend deux éléments juxtaposés solidaires respectivement des deux arbres à assembler. Les deux éléments (fourche et manchon) sont aptes à être assemblés par un moyen d'accouplement en rotation comprenant des parties respectives de formes complémentaires. La fourche et le manchon sont rendus solidaires par une vis perpendiculaire à l'arbre.

L'invention vise à remédier à cet inconvénient grâce à un dispositif de raccordement qui puisse être mis en place sans difficulté, éventuellement par un robot d'assemblage.

A cet effet, le dispositif selon l'invention, pour le raccordement de deux arbres du type susmentionné à proximité du tablier d'un véhicule, comporte deux éléments juxtaposés qui sont solidaires chacun de l'un des deux arbres et assemblés par un moyen d'accouplement en rotation comprenant des parties respectives de formes complémentaires, et est caractérisé en ce que les deux susdits éléments sont maintenus assemblés par un moyen de fixation à vis située dans l'habitacle et sensiblement parallèle à l'un des deux arbres.

Suivant diverses dispositions intéressantes :
- les deux susdits éléments sont juxtaposés par appui sur une face plane, perpendiculaire à l'arbre précité, de l'un d'eux, et lesdites parties respectives sont engageables suivant une direction transversale parallèle à cette face ;
- les moyens d'accouplement sont constitués d'une part par une extension radiale en forme d'étrier de l'un des deux éléments juxtaposés, chevauchant un tronçon à bord rectiligne, perpendiculaire à la direction précitée, de l'autre élément, et d'autre part par un ergot saillant de l'un desdits éléments et engagé dans une encoche, parallèle à cette direction, de l'autre élément ;
- les deux éléments juxtaposés sont l'un une bride fixée à l'arbre d'un pignon de crémaillère ou d'une pièce rotative d'une vanne d'assistance, et l'autre une pièce de support d'une articulation inférieure de l'arbre relié au volant ;

Un mode de réalisation du dispositif selon l'invention est décrit ci-après, avec référence aux dessins annexés parmi lesquels :
- la figure 1 est une vue simplifiée, en coupe par un plan vertical longitudinal, d'une partie de véhicule comportant le dispositif ;
- les figures 2 et 3 sont des vues à plus grande échelle du dispositif, en perspectives inclinées respectivement par dessous et par dessus ;
- la figure 4 est une vue analogue à la figure 3 avant assemblage des deux éléments principaux du dispositif.

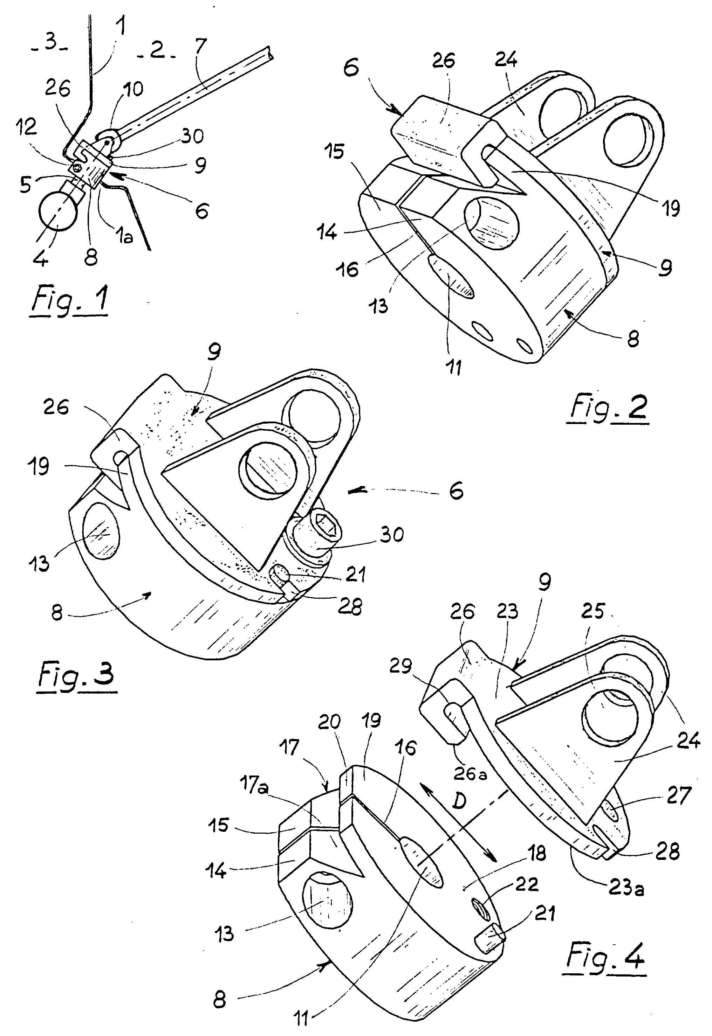

On voit sur la figure 1 une portion d'un tablier 1 séparant l'habitacle 2 et le compartiment moteur 3 d'un véhicule automobile. D'un boîtier de direction 4 situé dans ce compartiment saille vers le haut un arbre 5 relié par un dispositif de raccordement 6 à un arbre 7 situé dans l'habitacle et relié de façon usuelle non représentée au volant de direction du véhicule. L'arbre 5 est par exemple celui d'un pignon engrenant avec une crémaillère de direction, ou l'extrémité d'une pièce rotative d'une vanne d'assistance de direction.

Le dispositif 6 traverse le tablier 1 par une ouverture 1a et comporte un élément inférieur 8 solidaire de l'arbre 5 saillant du boîtier 4, et un élément supérieur 9 formant pièce de support pour une articulation usuelle 10 -du type à croisillon- de l'extrémité inférieure de l'arbre 7.

L'élément inférieur 8 est constitué d'une bride fixée à l'arbre 5 par emmanchement axial suivant un alésage 11 de préférence dentelé et par serrage, au moyen d'une vis 12 engagée dans un trou transversal 13 de la bride, de deux portions 14,15 de celle-ci séparées par une fente radiale 16.

Un embrèvement rectiligne transversal 17 de la bride délimite avec une face d'extrémité 18 de celle-ci, perpendiculaire à l'alésage 11, un tronçon plat 19 dont le bord 20 est, comme l'embrèvement 17, perpendiculaire à la direction radiale D de la fente 16. Un ergot 21 saille perpendiculairement de la face 18, et un trou taraudé 22 débouche dans cette face.

L'élément supérieur 9 est constitué d'une plaque 23 d'où saillent perpendiculairement, du côté opposé à sa face inférieure 23a, deux flasques parallèles 24 percés chacun d'une ouverture 25 propre à recevoir un axe du croisillon de l'articulation 10.

Une extension radiale 26 de la plaque 23 est repliée du côté opposé aux flasques 24 de façon à former un étrier propre à chevaucher le tronçon plat 19, et dans cette plaque sont agencés un trou 27 et une encoche 28 qui s'étend perpendiculairement au fond 29 et au bord extrême 26a de l'étrier 26.

Cette encoche 28 et cette vis 27 sont dimensionnées de manière à recevoir avec faible jeu respectivement l'ergot 21 et la tige d'une vis 30 propre à coopérer avec le trou taraudé 22, et sont disposées dans la plaque 23 de manière que lorsque celle-ci est en appui par sa face 23A sur la face 18 de la bride 8, l'engagement de l'étrier 26 sur le tronçon plat 19 et de l'encoche 28 sur l'ergot 21 puisse s'effectuer par coulissement transversal à l'arbre 5, donc à l'alésage 11, suivant la direction D, et que la vis 30 puisse être mise en place, passant par le trou 27 et vissée dans le trou taraudé 22, lorsque le fond 29 de l'étrier est sensiblement contre le bord 20 de l'élément 8, ou bien lorsque le bord rectiligne incliné 26a de l'étrier est en butée sur une face inclinée complémentaire 17a de l'embrèvement.

Dans cette position relative des éléments 8 et 9, comme visible aux figures 2 et 3, leur accouplement en rotation est assuré par la coopération de l'étrier 26 avec le tronçon plat 19, et celle de l'ergot 21 avec l'encoche 28, et leur maintien dans cette position est assuré par la vis de fixation 30.

Après mise en place, dans le compartiment moteur 3, du boîtier de direction 4 avec l'axe 5 auquel l'élément inférieur 8 est fixé par la vis 12, cet élément 8 étant engagé dans l'ouverture 1a du tablier 1, l'arbre 7 et son articulation 10 associée à l'élément 9 sont approchés du tablier 1, dans l'habitacle 2. Cet élément 9 est d'abord présenté légèrement excentré de l'axe de l'arbre 5, son étrier 26 débordant le tronçon 19 de l'élément 8, puis mis en appui axial par sa face 23a sur la face 18 de l'élément 8, et enfin déplacé radialement dans la direction D pour assurer l'accouplement susmentionné. La vis 30 est alors engagée par le haut, perpendiculairement à la plaque 23 et à la face 18, donc parallèlement à l'arbre 5, dans le trou 27 de l'élément 9 et vissée dans le trou taraudé 22 de l'élément 8.

Cet assemblage peut s'effectuer par des moyens robotisés notamment grâce à la disposition de la vis 30 dont le vissage s'effectue dans l'habitacle suivant un axe parallèle à l'arbre 5 donc à peu près perpendiculaire au tablier, de façon accessible par un outil placé près de l'arbre 7 relié au volant.

## Revendications

1. Dispositif de raccordement de la partie inférieure d'un arbre (7) relié à un volant de commande situé dans l'habitacle (2) d'un véhicule, à un arbre (5) relié à un organe d'entraînement d'un mécanisme de direction (4) de ce véhicule, cet organe étant situé dans un compartiment moteur (3) séparé de l'habitacle (2) par un tablier (1) et le raccordement s'effectuant à proximité de celui-ci, au moyen de deux éléments juxtaposés (8,9) qui sont solidaires chacun de l'un des deux arbres (5,7) et assemblés par un moyen d'accouplement en rotation comprenant des parties respectives (19,26;21,28) de formes complémentaires,
**caractérisé en ce que** les deux susdits éléments (8,9) sont maintenus assemblés par un moyen de fixation à vis (30) située dans l'habitacle et sensiblement parallèle à l'un (5) des deux arbres.

2. Dispositif selon la revendication 1,
**caractérisé en ce que** les deux susdits éléments (8,9) sont juxtaposés par appui sur une face plane (18), perpendiculaire à l'arbre précité (5), de l'un d'eux, et lesdites parties respectives (19,26,21,28) sont engageables suivant une direction transversale (D) parallèle à cette face (18).

3. Dispositif selon l'une des revendications 1 et 2,
**caractérisé en ce que** les moyens d'accouplement sont constitués d'une part par une extension radiale (26) en forme d'étrier de l'un (9) des deux éléments juxtaposés, chevauchant un tronçon (19) à bord rectiligne (20), perpendiculaire à la direction (D) précitée, de l'autre élément (8), et d'autre part par un ergot (21) saillant de l'un (8) desdits éléments et engagé dans une encoche (28), parallèle à cette direction (D), de l'autre élément (9).

4. Dispositif selon l'une quelconque des revendications précédentes,
**caractérisé en ce que** les deux éléments juxtaposés (8,9) sont l'un une bride (8) fixée à l'arbre (5) d'un pignon de crémaillère ou d'une pièce rotative d'une vanne d'assistance, et l'autre une pièce (9) de support d'une articulation inférieure (10) de l'arbre (7) relié au volant.

## Patentansprüche

1. Vorrichtung zur Verbindung des unteren Teils einer Welle (7), die mit einem im Karosserieinnenraum (2) eines Fahrzeugs angeordneten Lenkrad verbunden ist, mit einer Welle (5), die mit einer Antriebsvorrichtung (4) einer Lenkvorrichtung dieses Fahrzeugs verbunden ist, wobei diese Vorrichtung in einem Motorraum (3) angeordnet ist, der von dem ka (2) durch eine Spritzwand (1) getrennt ist und die Verbindung nahe derselben erfolgt, und zwar mittels zweier nebeneinander angeordneter Teile (8, 9), die jeweils mit einer der beiden Wellen (5, 7) fest verbunden sind und mit einer Dreh-Verbindungsvorrichtung verbunden werden, die jeweils Bereiche mit komplementären Formen (19, 26; 21, 28) umfassen,
**dadurch gekennzeichnet, dass** die beiden vorgenannten Teile (8, 9) mittels einer Befestigungsvorrichtung (30) zusammengehalten werden, die mit einer Schraube arbeitet, die sich in dem Karosserieinnenraum befindet und im wesentlichen parallel zu einer (5) der beiden Wellen angeordnet ist.

2. Vorrichtung nach Anspruch 1, **dadurch gekennzeichnet, dass** die beiden vorgenannten Teile (8, 9) durch das Anliegen an eine ebene, zur vorgenannten Welle (5) lotrechten Seite einer von ihnen beiden nebeneinander angeordnet und können die beiden jeweiligen Bereiche (19, 26, 21, 28) in einer transversalen Richtung (D) ineinander eingreifen, die parallel zu dieser Seite (18) verläuft.

3. Vorrichtung nach einem der Ansprüche 1 und 2, **dadurch gekennzeichnet, dass** die Verbindungsvorrichtungen einerseits aus einer radialen, bügelförmigen Verlängerung (26) eines (9) der beiden nebeneinander angeordneten Teile, die über einen Abschnitt (19) mit geradem Rand (20) des anderen Teils (8) greift, der quer zur vorgenannten Richtung (D) ist, und andererseits aus einem Nocken (21) bestehen, der aus einem (8) der Teile hervorsteht und in eine Auskerbung (28) eingreift, die parallel zu dieser Richtung (D) des anderen Teils (9) angeordnet ist

4. Vorrichtung nach einem der vorstehenden Ansprüche, **dadurch gekennzeichnet, dass** die beiden nebeneinander angeordneten Teile (8, 9) einerseits ein Flansch (8), der an der Welle (5) eines Zahnstangenritzels oder eines drehbaren Teils eines Hilfsventils befestigt ist, und andererseits eine Haltevorrichtung (9) für ein unteres Gelenk (10) der Welle (7) sind, die mit dem Lenkrad verbunden ist.

## Claims

1. Device for joining the lower portion of a shaft (7) connected to a steering wheel, located in the passenger compartment (2) of a vehicle, to a shaft (5) connected to a unit for driving a steering mechanism (4) for that vehicle, this unit being located in the engine compartment (3) separated from the passenger compartment (2) by a bulkhead (1) and the join being effected close to said bulkhead, by means of two juxtaposed members (8, 9) that are each integral with one of the two shafts (5, 7) and assembled by a rotating coupling means comprising respective portions (19, 26, 21, 28) of complementary shapes,
**characterised in that** the two aforementioned members (8, 9) are kept assembled by a screw-type fixing means (30) located within the passenger compartment and substantially parallel to one (5) of the two shafts.

2. Device according to Claim 1,
**characterised in that** the two aforementioned members (8, 9) are juxtaposed by bearing against a plane face (18), perpendicular to the aforementioned shaft (5), of one of them, and said respective portions (19, 26, 21, 28) can be engaged in a transverse direction (D) parallel to said face (18).

3. Device according to one of Claims 1 and 2,
**characterised in that** the coupling means are constituted on the one hand by a calliper-shaped radial extension (26) of one (9) of the two juxtaposed members, straddling a section (19) with a rectilinear edge (20), perpendicular to the aforementioned direction (D), of the other member (8), and on the other hand by a lug (21) projecting from one (8) of said members and engaged in a notch (28), parallel to said direction (D), in the other member (9).

4. Device according to any one of the preceding claims,
**characterised in that** the two juxtaposed members (8, 9) are in one case a flange (8) fixed to the shaft (5) of a rack pinion or a rotary part of an assistance valve, and in the other case a part (9) supporting a lower joint (10) of the shaft (7) connected to the steering wheel.
